# DEMANDE DE BREVET EUROPEEN

(11) **EP 4 042 870 A1**
(43) Date de publication de la demande: **17.08.2022**
(21) Numéro de dépôt: 22156252.3
(22) Date de dépôt: 11.02.2022
(51) Int. Cl.: A21B 3/13, A21B 3/18, A21C 11/02

(54) **DISPOSITIF DE CONFECTION DE PREPARATION CULINAIRE**

(30) Priorité: 12.02.2021 FR 2101368
(71) Demandeur: Lamour, Laurent, 71380 SAINT MARCEL (FR)
(72) Inventeur: Lamour, Laurent, 71380 SAINT MARCEL (FR)
(74) Mandataire: Oudin, Stéphane

(57) **Abrégé**

La présente invention a pour objet un plateau (6) pour la préhension et la manutention de biscuits ou d'un des d'éléments de biscuits, remarquable en ce qu'il comprend une plaque (18) plane munie d'une pluralité d'empreintes agencées pour accueillir au moins une portion de pâte ou un des éléments des biscuits, et un orifice (20) aménagé au fond de chaque empreinte et la traversant de part et en part, lesdites empreintes sont telles que la plaque (18) comporte sur une de ses faces longitudinales (22) une pluralité de portions concaves et de l'autre (22) de ses faces longitudinales (22) une pluralité de portions convexes (24). L'invention concerne également un dispositif de confection (1) comprenant au moins un plateau (6).

## Description

### Domaine technique de l'invention

La présente invention concerne le domaine des préparations alimentaires, plus particulièrement un dispositif de confection de préparations alimentaires.

### Etat de la technique

Dans le domaine des préparations alimentaires en général, et celui en particulier de la confection de biscuits, il est connu d'utiliser un ou plusieurs dispositifs de préparation et/ou confection, ces derniers étant plus ou moins automatisés et permettant de réduire les temps de confection en simplifiant notamment les opérations nécessitant beaucoup de main d'œuvre.

Toutefois, les dispositifs connus sont certes efficaces mais présentent l'inconvénient majeur d'être, la plupart du temps, encombrants, complexes (nécessité de nombreuses pièces) et significativement coûteux.

### Résumé de l'invention

Le but de la présente invention est donc de pallier les inconvénients précédemment cités et de proposer une alternative aux dispositif de confections de biscuits connus de conception simple et compacte et permettant de réduire significativement la main d'œuvre lors des opérations telles que, notamment, le décoquage (opération consistant à décoller les biscuits disposés sur un papier sulfurisé et adhérant audit papier lors de leur cuisson dans un four), la garniture, l'assemblage ou le conditionnement des biscuits.

Conformément à l'invention, il est donc proposé dispositif de confection de biscuits remarquable en ce qu'il comporte au moins :
- un bâti agencé pour reposer sur le sol et déterminant un logement ouvert au moins sur la face avant dudit bâti,
- un cadre de réception fixé audit bâti à l'intérieur dudit logement, et
- un caisson d'aspiration disposé à l'intérieur dudit logement au-dessus dudit cadre de réception, et étant monté mobile par rapport au bâti et apte à recevoir et maintenir, de façon amovible, au moins un plateau, ledit plateau comprenant une plaque plane munie d'une pluralité d'empreintes agencées pour accueillir au moins une portion de pâte ou un des éléments des biscuits, et un orifice aménagé au fond de chaque empreinte et la traversant de part et en part, lesdites empreintes étant telles que la plaque comporte sur une de ses faces longitudinales une pluralité de portions concaves et de l'autre de ses faces longitudinales une pluralité de portions convexes.

Chaque orifice est de préférence aménagé au centre de l'empreinte associée.

Selon un mode de réalisation avantageux, chaque plateau est réalisé à partir d'une matière synthétique ou métallique et par thermoformage ou emboutissage.

De manière avantageuse, le caisson d'aspiration est en forme générale de parallélépipède et comporte sur l'une de ses faces longitudinales, nommée ci-après face de réception, une pluralité d'orifices, ces derniers étant raccordés chacun à des moyens d'aspiration et, d'une part, il translate verticalement entre une position "basse" dans laquelle la face de réception vient à proximité du cadre de réception et une position "haute" située au-dessus de ladite position "basse" et, d'autre part, il pivote autour d'un axe globalement horizontal entre une position "visible" dans laquelle la face de réception est orientée du côté opposé au cadre de réception et une position "retournée" dans laquelle ladite face de réception est en vis-à-vis du cadre de réception.

Selon un mode de réalisation préféré, le caisson d'aspiration est en forme générale de parallélépipède et comporte une plaque de réception interchangeable disposée de manière amovible sur l'une de ses faces longitudinales, nommée ci-après face de réception, et comprenant une pluralité d'orifices la traversant de part en part, ces derniers étant raccordés chacun à des moyens d'aspiration et, d'une part, il translate verticalement entre une position "basse" dans laquelle la face de réception vient à proximité du cadre de réception et une position "haute" située au-dessus de ladite position "basse" et, d'autre part, il pivote autour d'un axe horizontal entre une position "visible" dans laquelle la face de réception est orientée du côté opposé au cadre de réception et une position "retournée" dans laquelle ladite face de réception est en vis-à-vis du cadre de réception.

Le nombre et la répartition desdits orifices de la face de réception sont de préférence identiques au nombre et à la répartition des empreintes du plateau.

Le cadre de réception est avantageusement en forme générale de parallélépipède et comporte au moins :
- une face supérieure globalement horizontale,
- une face avant au moins en partie biseautée de sorte à avoir une partie basse inclinée vers l'arrière et le bas,
- une pluralité de premiers orifices aménagés sur ladite face supérieure,
- une pluralité de deuxièmes orifices aménagés sur ladite partie basse, et
- une pluralité de canaux internes mettant en relation chacun des premiers orifices avec l'un des deuxièmes orifices.

De manière préférée, le nombre de deuxièmes orifices est égal au nombre de premiers orifices et le nombre et la répartition desdits premiers orifices sont identiques au nombre et à la répartition des orifices du caisson d'aspiration.

Selon un mode de réalisation préféré, le cadre de réception reçoit sur sa face supérieure une plaque de réception amovible et interchangeable, et comprenant une pluralité d'orifices la traversant de part en part, dont le nombre et la répartition sont identiques au nombre et à la répartition des premiers orifices aménagés sur la face supérieure du cadre de réception.

La plaque de réception du caisson d'aspiration et la plaque de réception du cadre de réception sont avantageusement identiques.

Selon un mode de réalisation avantageux, le dispositif de confection comporte une zone de réception agencée pour accueillir parallèlement à la partie basse de la face avant du cadre de réception au moins un casier de conditionnement muni d'une pluralité d'alvéoles de manière à ce que chacune desdites alvéoles soient en vis-à-vis d'un des deuxièmes orifices aménagés sur ladite partie basse, le nombre et la répartition des alvéoles étant identiques au nombre et à la répartition desdits deuxièmes orifices.

### Brève description des figures

D'autres avantages et caractéristiques ressortiront mieux de la description qui va suivre d'un mode d'exécution de l'invention, en référence aux figures annexées sur lesquelles :
[Fig 1] est une vue en perspective d'un dispositif de confection de biscuits conforme à l'invention,
[Fig 2] est une vue de détail du dispositif de confection de biscuits de la figure 1,
[Fig 3] est une vue de coupe verticale partielle du dispositif de confection de biscuits selon l'axe III-III' de la figure 2 montrant le cadre de réception dudit dispositif de confection associée à une vue de détail partielle agrandie,
[Fig 4] est une vue en perspective du caisson d'aspiration du dispositif de confection de biscuits de la figure 1 muni de plateaux, lors de l'étape de décoquage,
[Fig 5] est une vue de coupe verticale partielle du dispositif de confection de biscuits selon l'axe III-III' de la figure 2 montrant le caisson d'aspiration dudit dispositif de confection associée à une vue de détail partielle agrandie,
[Fig 6] est une vue en perspective du dessus de la plaque de réception amovible du cadre de réception de la figure 3,
[Fig 7] est une vue en perspective du dessus des plateaux mis en place sur la plaque amovible de la figure 6,
[Fig 8] est une vue du dessous d'un des plateaux de la figure 7.

### Description des modes de réalisation

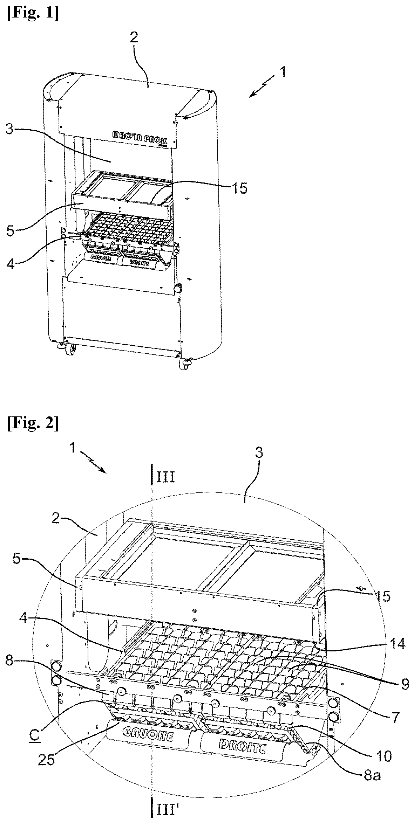

Sur les figures 1 à 6, on a représenté un dispositif de confection 1 de biscuits tels que, par exemple, des macarons non représentés sur les figures, formés par deux éléments de pâte cuite, un supérieur et un inférieur, recevant entre eux une garniture. Ledit dispositif de confection 1 permet de réaliser une certain nombre d'opérations entrant dans le processus de confection desdits biscuits, et comporte au moins :
- un bâti 2 agencé pour reposer sur le sol et déterminant un logement 3 ouvert au moins sur la face avant dudit bâti 2,
- un cadre de réception 4 fixé audit bâti 1 à l'intérieur dudit logement 3, et
- un caisson d'aspiration 5 disposé à l'intérieur dudit logement 3 au-dessus dudit cadre de réception 4, et étant monté mobile par rapport au bâti 2 et apte à recevoir et maintenir de façon amovible au moins un plateau 6 agencé pour recevoir des biscuits ou au moins un des éléments des biscuits confectionnés le dispositif de confection 1 selon l'invention.

On désigne ici par "avant" un élément ou partie d'élément du dispositif de confection 1 étant situé du côté de l'opérateur utilisant ledit dispositif de confection 1 et par "arrière" un élément ou partie d'élément situé du côté opposé.

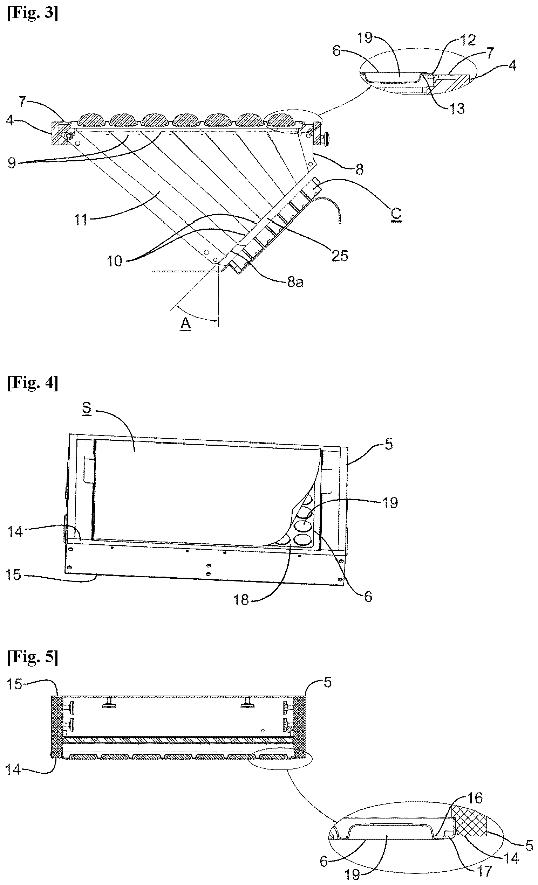

Le cadre de réception 4 est en forme générale de parallélépipède et comporte au moins une face supérieure 7 globalement horizontale et une face avant 8 au moins en partie biseautée de sorte à avoir une partie basse 8a inclinée vers l'arrière et le bas et formant un angle A avec la verticale compris entre 30 et 70°, ledit angle A étant avantageusement égal à 45° (Cf. figure 3).

On désigne ici par "globalement horizontal" ou "globalement vertical" un élément ou partie d'élément du dispositif de confection 1 formant respectivement avec la verticale ou l'horizontale un angle compris entre 70 et 110°.

Par ailleurs, le cadre de réception 4 comprend une pluralité de premiers orifices 9 aménagés sur sa face supérieure 7, une pluralité de deuxièmes orifices 10 aménagés sur la partie basse 8a de sa face avant 8, et une pluralité de canaux internes 11 mettant en relation chacun des premiers orifices 9 avec l'un des deuxièmes orifices 10. Dès lors, on comprend bien que le nombre de deuxièmes orifices 10 est égal au nombre de premiers orifices 9.

Conformément au mode de réalisation non limitatif représenté sur les figures, pour permettre de changer d'une forme et/ou taille de biscuit à une autre, le cadre de réception 4 reçoit avantageusement sur sa face supérieure 7 une plaque de réception 12 amovible et interchangeable, et comprenant une pluralité d'orifices 13 la traversant de part en part, dont le nombre et la répartition sont identiques au nombre et à la répartition des premiers orifices 9 aménagés sur la face supérieure 7 du cadre de réception 4.

Le caisson d'aspiration 5 est également en forme générale de parallélépipède et comporte sur l'une 14 de ses faces longitudinales 14,15, nommée ci-après face de réception, une pluralité d'orifices 16 traversant de part en part ladite face de réception 14, ces derniers étant, pour des raisons développées plus loin, associés à des moyens d'aspiration, ces derniers permettant d'aspirer l'air au niveau de chacun desdits orifices 16 et étant disposés dans ledit caisson d'aspiration 5 ou dans le bâti 2 du dispositif de confection 1.

Pour des raisons développées plus loin, le nombre et la répartition desdits orifices 16 du caisson d'aspiration 5sont identiques au nombre et à la répartition des premiers orifices 9 aménagés sur la face supérieure 7 du cadre de réception 4 et, le cas échéant, au nombre et à la répartition des orifices 13 de la plaque de réception 12 du cadre de réception 4.

Conformément au mode de réalisation non limitatif représenté sur les figures, pour permettre de changer d'une forme et/ou taille de biscuit à une autre, les orifices 16 du caisson d'aspiration 5 sont avantageusement aménagés sur une plaque de réception 17 interchangeable disposée de manière amovible sur la face de réception 14 dudit caisson d'aspiration 5, les orifices 16 traversant alors ladite plaque de réception 17 de part en part. Dans cette hypothèse, on comprend bien que la face de réception 14 du caisson d'aspiration 5 comprend une découpe en lieu et place des orifices 16, cette découpe étant de dimensions telles qu'aucun des orifices 16 n'est obturé par ladite face de réception 14.

De manière avantageuse, la plaque de réception 17 du caisson d'aspiration 5 et la plaque de réception 12 du cadre de réception 4 sont identiques.

Par ailleurs, comme décrit ci-dessus, le caisson d'aspiration 5 est monté mobile par rapport au bâti 2 de manière à pouvoir, d'une part, translater verticalement entre une position "basse" dans laquelle la face de réception 14 vient à proximité de la face supérieure 7 du cadre de réception 4 et une position "haute" située au-dessus de ladite position "basse" et, d'autre part, pivoter autour d'un axe globalement horizontal, parallèle à la face supérieure 7 du cadre de réception 4, entre une position "visible" dans laquelle la face de réception 14 est orientée du côté opposé au cadre de réception 4 en faisant avec l'horizontale un angle compris entre 0 et 45° de sorte à être visible pour un opérateur se tenant debout devant le dispositif de confection 1, et une position "retournée" dans laquelle ladite face de réception 14 est en vis-à-vis de la face supérieure 7 du cadre de réception 4.

On comprend bien que la position "haute" du caisson d'aspiration 5 est telle qu'elle permet la rotation dudit caisson d'aspiration 5 sans risque d'interférence avec le cadre de réception 4.

Par ailleurs, l'Homme du métier n'aura aucune difficulté à choisir et dimensionner les moyens techniques tels que, par exemple, des éléments de transmission du type moteurs ou vérins, ou encore des capteurs de fin de course, à mettre en œuvre pour permettre le déplacement en translation ou en rotation du caisson d'aspiration 5. Lesdits éléments de transmission sont avantageusement du type à glissement, c'est-à-dire comportant une limitation électronique ou mécanique du couple, afin de garantir la sécurité de l'opérateur par rapport aux mouvements du caisson d'aspiration 5. Pour ce faire, on pourra, par exemple, utiliser des moteurs munis d'un limiteur de couple à friction ou encore des moteurs du type "brushless" (en français moteur "sans balai") associés à une limitation électronique du couple.

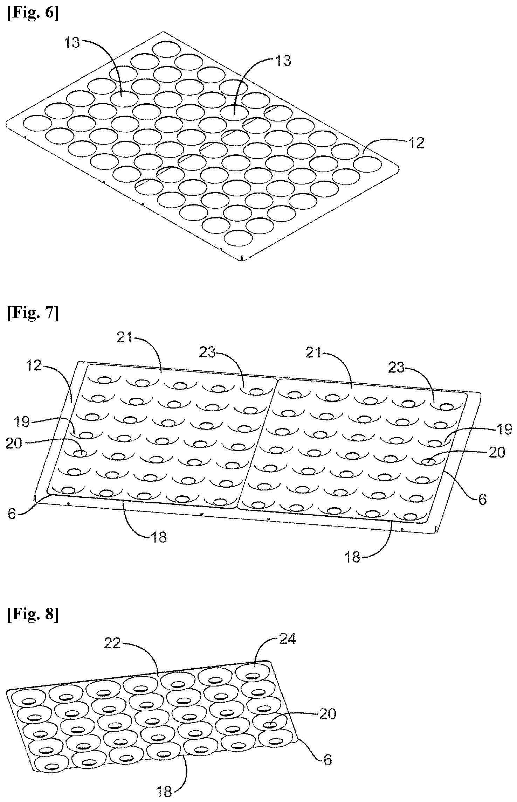

En référence aux figures 7 et 8, le dispositif de confection 1 selon l'invention comporte en outre au moins un plateau 6 pour la préhension et la manutention de biscuits ou d'un des d'éléments de biscuits apte à être reçu et maintenu de manière amovible par le caisson d'aspiration 5. Chaque plateau 6 comprend une plaque 18 plane munie d'une pluralité d'empreintes 19 en forme globale de calotte sphérique et un orifice 20 aménagé au fond de chaque empreinte 19 et la traversant de part et en part. Lesdites empreintes 19 sont telles que la plaque 18 comporte sur une 21 de ses faces longitudinales 21,22 une pluralité de portions concaves 23 et de l'autre 22 de ses faces longitudinales 21,22 une pluralité de portions convexes 24. Chaque orifice 20 est avantageusement aménagé au centre de l'empreinte 19 associée. Par ailleurs, la forme et la taille de chaque empreinte 19 sont déterminées par la forme et la taille du biscuit à confectionner ou de l'élément de biscuit à confectionner.

Pour des raisons développées plus loin, le nombre et la répartition desdites empreintes 19 sont identiques au nombre et à la répartition des orifices 16 aménagés sur la face de réception 14 du caisson d'aspiration 5 ou, le cas échéant, sur la plaque de réception 17 du caisson d'aspiration 5, et par conséquent identiques au nombre et à la répartition des premiers orifices 9 aménagés sur la face supérieure 7 du cadre de réception 4 et, le cas échéant, au nombre et à la répartition des orifices 13 de la plaque de réception 12 du cadre de réception 4.

Dans l'exemple de réalisation non limitatif représenté sur les figures, le dispositif de confection 1 comporte deux plateaux 6 amovibles. On comprend bien que l'ensemble des empreintes 19 des deux plateaux 6 correspondent à la répartition des orifices 16 aménagés sur la face de réception 14 du caisson d'aspiration 5 ou, le cas échéant, sur la plaque de réception 17 du caisson d'aspiration 5.

Pour des raisons évidentes de légèreté et de simplicité de fabrication, chaque plateau 6 est avantageusement réalisé à partir d'une matière synthétique ou métallique et par thermoformage ou emboutissage.

Avec la configuration du dispositif de confection 1 selon l'invention précédemment décrite, pour confectionner des biscuits formés par deux éléments de pâte cuite, un supérieur et un inférieur, recevant entre eux une garniture, on procède selon les étapes décrites ci-après.

Tout d'abord, avant d'utiliser le dispositif de confection 1 selon l'invention, une portion de pâte crue, correspondant au premier élément des biscuits à confectionner, est disposée dans chacune des empreintes 16 des plateaux 6, ce dernier est ensuite recouvert d'un papier sulfurisé S, puis déposé sur une plaque de cuisson côté papier sulfurisé S, ce dernier pouvant évidemment être remplacé par film en polytétrafluoroéthylène ou en silicone.

Cette opération est, de manière classique, réalisée sur une machine de dressage, mais elle pourra également être réalisée directement sur le dispositif de confection 1 selon l'invention.

Ladite plaque de cuisson est enfin disposée dans un four pour cuire lesdites portions de pâte crue afin d'obtenir les premiers éléments des biscuits. On procède de même pour obtenir les deuxièmes éléments des biscuits.

Une fois lesdits premiers éléments cuits, le caisson d'aspiration 5 du dispositif de confection 1 est positionné en position "haute" et en position "retournée", puis la plaque de cuisson supportant le papier sulfurisé S et les plateaux 6 est disposée sur la plaque de réception 12 du cadre de réception 4, de sorte que chaque empreinte 19 des plateaux 6 se trouve à l'aplomb de de l'orifice 16 correspondant du caisson d'aspiration 5. Le caisson d'aspiration 5 se déplace jusqu'à sa position "basse", de sorte que chaque empreinte 19 des plateaux 6 vienne s'insérer dans l'orifice 16 correspondant, jusqu'à ce que la face longitudinale 22 de la plaque 18 de chaque plateau 6 vienne en appui contre la face de réception 14 dudit caisson d'aspiration 5 ou, le cas échéant, contre la plaque de réception 17. Les moyens d'aspiration sont ensuite mis en marche pour aspirer l'air présent au droit de chaque orifice 16 du caisson d'aspiration 5 et ainsi plaquer et maintenir contre le caisson d'aspiration 5 les plateaux 6, mais également les premiers éléments cuits, grâce à l'orifice 20 aménagé au fond de chaque empreinte 19 desdits plateaux 6. Le caisson d'aspiration 5 remonte vers sa position "haute" en entrainant avec lui l'ensemble papier sulfurisé S - plateaux 6 - premiers éléments cuits, puis pivote jusqu'à sa position "visible".

En référence à la figure 4, on comprend bien qu'un opérateur peut alors facilement effectuer l'opération de décoquage en retirant le papier sulfurisé S sans risquer d'extraire un des premiers éléments desdits plateaux 6. Enfin, les moyens d'aspiration sont arrêtés pour pouvoir enlever du caisson d'aspiration 5 les plateaux 6 contenant les premiers éléments cuits.

On procédera de la même façon pour retirer le papier des deuxièmes éléments des biscuits à confectionner.

Après avoir déposé une portion de garniture sur chacun des premiers éléments cuits contenus dans des plateaux 6, on dispose l'ensemble sur le cadre de réception 4 en insérant chaque empreinte 19 des plateaux 6 dans le premier orifice 9 correspondant du cadre de réception 4, jusqu'à ce que la face longitudinale 22 de la plaque 18 de chaque plateau 6 vienne en appui contre la face supérieure 7 dudit cadre de réception 4. Dans l'hypothèse où le dispositif de confection 1 selon l'invention comporte, comme représenté sur les figures, une plaque de réception 12 disposée sur la face supérieure 7 du cadre de réception 4, les plateaux 6 sont alors disposés sur ladite plaque de réception 12 en insérant chaque empreinte 19 desdits plateaux 6 dans l'orifice 13 correspondant de la plaque de réception 12, jusqu'à ce que la face longitudinale 22 de la plaque 18 de chaque plateau 6 vienne en appui contre ladite plaque de réception 12.

Le caisson d'aspiration 5 du dispositif de confection 1 étant toujours positionné en position "haute" et en position "visible", on dispose les plateaux 6 contenant les deuxièmes éléments cuits sur ledit caisson d'aspiration 5 en insérant chaque empreinte 19 desdites plateaux 6 dans l'orifice 16 correspondant du caisson d'aspiration 5, jusqu'à ce que la face longitudinale 22 de la plaque 18 de chaque plateau 6 vienne en appui contre la face longitudinale 12 dudit caisson d'aspiration 5 ou, le cas échéant, contre la plaque de réception 17. Les moyens d'aspiration sont ensuite mis en marche pour aspirer l'air au droit de chaque orifice 16 et ainsi plaquer et maintenir contre le caisson d'aspiration 5 les plateaux 6, mais également les deuxièmes éléments cuits grâce à l'orifice 20 aménagé au fond de chaque empreinte 19 desdits plateaux 6. Après, le caisson d'aspiration 5 pivote jusqu'à sa position "retournée", puis translate jusqu'à sa position "basse", dans laquelle les deuxièmes éléments cuits viennent en appui contre la portion de garniture du premier élément cuit associé pour former un biscuit complet.

L'homme du Métier n'aura aucune difficulté à déterminer la position "basse" optimale en fonction des dimensions et forme des plateaux 6 et de la valeur des portions de pâte crue et de garniture.

Les moyens d'aspiration sont arrêtés, puis le caisson d'aspiration 5 translate vers sa position "haute" et pivote enfin vers sa position "visible". A ce stade, les plateaux 6 ayant contenu les deuxièmes éléments cuits sont retirés du dispositif de confection 1, et les plateaux 6 contenant les biscuits complets sont alors disposés sur ledit caisson d'aspiration 5 en insérant chaque empreinte 19 desdites plateaux 6 dans l'orifice 16 correspondant du caisson d'aspiration 5, jusqu'à ce que la face longitudinale 22 de la plaque 18 de chaque plateau 6 vienne en appui contre la face longitudinale 12 dudit caisson d'aspiration 5 ou, le cas échéant, contre la plaque de réception 17.

Pour réaliser le conditionnement des biscuits complets, on dispose, dans une zone de réception 25 du dispositif de confection 1, au moins un casier de conditionnement C (Cf. figure 3) comprenant une pluralité d'alvéoles, ladite zone de réception étant agencée pour accueillir parallèlement à la partie basse 8a de la face avant 8 du cadre de réception 4 chaque casier de conditionnement C de manière à ce que chacune desdites alvéoles soient en vis-à-vis d'un des deuxièmes orifices 10 aménagés sur ladite partie basse 8a.

Il va de soi que le nombre et la répartition desdites alvéoles du ou des casiers de conditionnement C sont identiques au nombre et à la répartition des deuxièmes orifices 10 aménagés sur la partie basse 8a de la face avant 8 du cadre de réception 4.

Une fois les casiers de conditionnement C en place dans la zone de réception 25, les moyens d'aspiration sont mis en marche pour aspirer l'air présent au droit de chaque orifice 16 du caisson d'aspiration 5 et ainsi plaquer et maintenir contre ce dernier les plateaux 6, mais également les biscuits complets grâce à l'orifice 20 aménagé au fond de chaque empreinte 19 desdits plateaux 6. Après, le caisson d'aspiration 5 pivote jusqu'à sa position "retournée", puis translate jusqu'à sa position "basse". Dans cette position, les moyens d'aspiration sont arrêtés et les biscuits complets se détachent par gravité de leurs plateaux 6, tombent dans les alvéoles correspondantes des casiers de conditionnement C en passant successivement par les premiers orifices 9, les canaux internes 11 et les deuxièmes orifices 10 du cadre de réception 4.

Dans l'hypothèse où le dispositif de confection 1 selon l'invention comporte, comme représenté sur les figures, une plaque de réception 12 disposée sur la face supérieure 7 du cadre de réception 4, les biscuits complets passent d'abord par les orifices 13 de ladite plaque de réception 12. Dans cette même hypothèse, on pourra également retirer plaque de réception 12 du cadre de réception 4 afin de faciliter le passage des biscuits complets.

Lesdits canaux internes 11 sont avantageusement conformés pour les biscuits complets pivotent de 90° sur eux-mêmes pour être conditionnés sur leur chant dans les alvéoles correspondantes des casiers de conditionnement C, pour des raisons de résistance à l'écrasement.

Une fois remplis par les biscuits complets, les casiers de conditionnement C sont retirés du dispositif de confection 1 et reçoivent chacun un couvercle en vue de leur expédition.

Pour faciliter le retrait des casiers de conditionnement C, la zone de réception 25 du dispositif de confection 1 est avantageusement pivotante autour d'un axe globalement horizontal parallèle à l'axe de pivotement du caisson d'aspiration 5.

Selon une variante d'utilisation du dispositif de confection 1 pour réaliser le conditionnement des biscuits complets, lorsque les biscuits complets sont dans des plateaux 6 disposés sur le cadre de réception 4 et recouverts par d'autres plateaux 6 disposés sur le caisson d'aspiration 5 en position "basse" et position "retournée", on maintient l'aspiration au droit de chaque orifice 16 du caisson d'aspiration 5 et le caisson d'aspiration est déplacé en direction de sa position "haute" en entrainant avec lui les plateaux 6 recouvrant les biscuits complets et ces derniers. Le caisson d'aspiration 5 n'est pas déplacé jusqu'à sa position "haute" mais d'une distance suffisante pour retirer les plateaux 6 ayant contenu les premiers éléments cuits et la plaque de réception 12 du cadre de réception 4. Ensuite, le caisson d'aspiration 5 n'est pas déplacé jusqu'à sa position "basse", puis on arrête l'aspiration, les biscuits complets se détachent par gravité de leurs plateaux 6, tombent dans les alvéoles correspondantes des casiers de conditionnement C en passant successivement par les premiers orifices 9, les canaux internes 11 et les deuxièmes orifices 10 du cadre de réception 4.

On comprend bien qu'avec leur configuration particulière, les plateaux 6 et le dispositif de confection 1 selon l'invention permettent une confection rapide et moins onéreuse de biscuits complets formés par deux éléments de pâte cuite, un supérieur et un inférieur, recevant entre eux une garniture.

Le dispositif de confection 1 et les plateaux 6 conformes à l'invention trouve une application particulière dans la confection de macarons. Toutefois, il est évident que le dispositif de confection 1 et les plateaux 6 peuvent être adaptés et utilisés pour confectionner d'autres types de biscuits tels que, par exemple, des biscuits sablés fourrés au chocolat.

Enfin, il va de soi que les exemples de dispositif de confection 1 et de plateaux 6 conformes à l'invention qui viennent d'être décrits ne sont que des illustrations particulières, en aucun cas limitatives de l'invention.

## Revendications

1. Dispositif de confection (1) de biscuits **caractérisé en ce qu'**il comporte au moins :
- un bâti (2) agencé pour reposer sur le sol et déterminant un logement (3) ouvert au moins sur la face avant dudit bâti (2),
- un cadre de réception (4) fixé audit bâti (1) à l'intérieur dudit logement (3), et
- un caisson d'aspiration (5) disposé à l'intérieur dudit logement (3) au-dessus dudit cadre de réception (4), et étant monté mobile par rapport au bâti (2) et apte à recevoir et maintenir, de façon amovible, au moins un plateau (6), ledit plateau (6) comprenant une plaque (18) plane munie d'une pluralité d'empreintes (19) agencées pour accueillir au moins une portion de pâte ou un des éléments des biscuits, et un orifice (20) aménagé au fond de chaque empreinte (19) et la traversant de part et en part, lesdites empreintes (19) étant telles que la plaque (18) comporte sur une (21) de ses faces longitudinales (21,22) une pluralité de portions concaves (23) et de l'autre (22) de ses faces longitudinales (21,22) une pluralité de portions convexes (24).

2. Dispositif de confection (1) selon la revendication 1 **caractérisé en ce que** chaque orifice (20) est aménagé au centre de l'empreinte (19) associée.

3. Dispositif de confection (1) selon l'une quelconque des revendications 1 ou 2 **caractérisé en ce que** chaque plateau (6) est réalisé à partir d'une matière synthétique ou métallique et par thermoformage ou emboutissage.

4. Dispositif de confection (1) selon l'une quelconque des revendications 1 à 3 **caractérisé en ce que** le caisson d'aspiration (5) est en forme générale de parallélépipède et comporte sur l'une (14) de ses faces longitudinales (14,15), nommée ci-après face de réception, une pluralité d'orifices (16), ces derniers étant raccordés chacun à des moyens d'aspiration et **en ce que**, d'une part, il translate verticalement entre une position "basse" dans laquelle la face de réception (14) vient à proximité du cadre de réception (4) et une position "haute" située au-dessus de ladite position "basse" et, d'autre part, il pivote autour d'un axe horizontal entre une position "visible" dans laquelle la face de réception (14) est orientée du côté opposé au cadre de réception (4) et une position "retournée" dans laquelle ladite face de réception (14) est en vis-à-vis du cadre de réception (4).

5. Dispositif de confection (1) selon l'une quelconque des revendications 1 à 3 **caractérisé en ce que** le caisson d'aspiration (5) est en forme générale de parallélépipède et comporte une plaque de réception (17) interchangeable disposée de manière amovible sur l'une (14) de ses faces longitudinales (14,15), nommée ci-après face de réception, et comprenant une pluralité d'orifices (16) la traversant de part en part, ces derniers étant raccordés chacun à des moyens d'aspiration et **en ce que**, d'une part, il translate verticalement entre une position "basse" dans laquelle la face de réception (14) vient à proximité du cadre de réception (4) et une position "haute" située au-dessus de ladite position "basse" et, d'autre part, il pivote autour d'un axe horizontal entre une position "visible" dans laquelle la face de réception (14) est orientée du côté opposé au cadre de réception (4) et une position "retournée" dans laquelle ladite face de réception (14) est en vis-à-vis du cadre de réception (4).

6. Dispositif de confection (1) selon l'une quelconque des revendications 4 ou 5 **caractérisé en ce que** le nombre et la répartition desdits orifices (16) de la face de réception (14) sont identiques au nombre et à la répartition des empreintes (16) du plateau (6).

7. Dispositif de confection (1) selon l'une quelconque des revendications 1 à 6 **caractérisé en ce que** le cadre de réception (4) est en forme générale de parallélépipède et comporte au moins :
- une face supérieure (7) globalement horizontale,
- une face avant (8) au moins en partie biseautée de sorte à avoir une partie basse (8a) inclinée vers l'arrière et le bas,
- une pluralité de premiers orifices (9) aménagés sur ladite face supérieure (7),
- une pluralité de deuxièmes orifices (10) aménagés sur ladite partie basse (8a), et
- une pluralité de canaux internes (11) mettant en relation chacun des premiers orifices (9) avec l'un des deuxièmes orifices (10).

8. Dispositif de confection (1) selon l'une quelconque des revendications 4 ou 5 et la revendication 8 **caractérisé en ce que** le nombre de deuxièmes orifices (10) est égal au nombre de premiers orifices (9) et **en ce que** le nombre et la répartition desdits premiers orifices (9) sont identiques au nombre et à la répartition des orifices (16) du caisson d'aspiration (5).

9. Dispositif de confection (1) selon l'une quelconque des revendications 7 ou 8 **caractérisé en ce que** le cadre de réception (4) reçoit sur sa face supérieure (7) une plaque de réception (12) amovible et interchangeable, et comprenant une pluralité d'orifices (13) la traversant de part en part, dont le nombre et la répartition sont identiques au nombre et à la répartition des premiers orifices (9) aménagés sur la face supérieure (7) du cadre de réception (4).

10. Dispositif de confection (1) selon les revendications 5 et 9 **caractérisé en ce que** la plaque de réception (17) du caisson d'aspiration (5) et la plaque de réception (12) du cadre de réception (4) sont identiques.

11. Dispositif de confection (1) selon l'une quelconque des revendications 1 à 8 **caractérisé en ce qu'**il comporte une zone de réception (25) agencée pour accueillir parallèlement à la partie basse (8a) de la face avant (8) du cadre de réception (4) au moins un casier de conditionnement (C) muni d'une pluralité d'alvéoles de manière à ce que chacune desdites alvéoles soient en vis-à-vis d'un des deuxièmes orifices (10) aménagés sur ladite partie basse (8a), le nombre et la répartition des alvéoles étant identiques au nombre et à la répartition desdits deuxièmes orifices (10).
